# EUROPEAN PATENT APPLICATION

(11) **EP 4 564 462 A1**
(43) Date of publication of application: **04.06.2025**
(21) Application number: 23846465.5
(22) Date of filing: 24.07.2023
(51) Int. Cl.: H01M 4/139, H01M 4/04, H01M 4/62

(54) **METHOD FOR MANUFACTURING MOLDED ARTICLE FOR SHEET-SHAPED ELECTRODE**

(30) Priority: 28.07.2022 JP 2022120971
(71) Applicant: FUJIFILM Corporation, Tokyo 106-8620 (JP)
(72) Inventor: KODAMA, Taiga, ashigara-shi, Kanagawa 250-0193 (JP); IWASE, Eijiro, ashigara-shi, Kanagawa 250-0193 (JP)
(74) Representative: Meissner Bolte Partnerschaft mbB
(86) International application number: PCT/JP2023/027039
(87) International publication number: WO 2024/024735

(57) **Abstract**

Provided is a manufacturing method of a molded body for a sheet-like electrode, the manufacturing method including a step A of dispersing and arranging, on a support, a plurality of bulk substances of an electrode material which contains an electrode active material and an electrolytic solution and has a concentration of solid components of 20% by volume to 90% by volume; and a step B of combining the plurality of bulk substances dispersed and arranged on the support by a molding member to form an electrode material film on the support.

## Description

### BACKGROUND OF THE INVENTION

### 1. Field of the Invention

The present disclosure relates to a manufacturing method of a molded body for a sheet-like electrode.

### 2. Description of the Related Art

In recent years, development of a semi-solid state battery has been studied.

An electrode applied to the semi-solid state battery is manufactured using, for example, an electrode material containing at least an electrode active material which is a powder and an electrolytic solution.

For example, JP2014-186969A discloses an electrode manufacturing apparatus including a unit which supplies a powder consisting of granulated particles containing an electrode active material, a binder, and a conductive material onto a support with a brush-shaped member.

JP2021-027043A discloses a manufacturing method of an electrode material for a lithium ion battery, that electrode composition layer arrangement parts in which electrode composition layers consisting of an electrode composition containing an electrode active material are arranged on a surface of a continuous sheet-like base material are intermittently arranged, the manufacturing method including a supply step of continuously supplying the electrode composition onto the base material, a pressurization step of pressurizing the electrode composition supplied onto the base material by the supply step to obtain the electrode composition layer, and a removal step of removing a part of the electrode composition supplied onto the base material by the supply step to form the electrode composition layer arrangement part on the base material.

### SUMMARY OF THE INVENTION

The manufacturing of the electrode applied to the semi-solid state battery includes, for example, a step of using an electrode material containing at least an electrode active material (an example of a solid component) which is a powder and an electrolytic solution (an example of a liquid component), and molding the electrode material into a sheet shape (also referred to as a layer shape or a film shape) on a support. In the step, (1) a method of extruding the electrode material onto the support to have the same thickness as a molded body for a sheet-like electrode to be manufactured, or (2) a method of extruding the electrode material onto the support to have a thickness larger than the molded body for a sheet-like electrode to be manufactured and adjusting the thickness of the extruded electrode material on the support is adopted.

However, the electrode material used for manufacturing the semi-solid state battery contains a large amount of the electrode active material which is a powder as compared with the electrolytic solution, and exhibits clay-like properties.

In a case where such an electrode material is applied to the method (1) described above, it is necessary to extrude the electrode material from a long rectangular outlet under a strong pressure (load). Therefore, a large load is applied to the device for discharging the electrode material.

On the other hand, in a case where the electrode material having clay-like properties is applied to the method (2) described above, unlike the method (1) described above, it is not necessary to extrude the electrode material from the long rectangular discharge port under a strong pressure. However, in the method (2), the thickness of the extruded electrode material is adjusted by scraping off the excess portion with a molding member such as a blade or pressing with a press machine, and further removing the excess portion to the outside of the support; but since the electrode material has clay-like properties, a large load is required in a case of deforming the electrode material with the molding member or the press machine.

That is, as described above, in the method (1) and method (2), a process of applying a large load to the electrode material is included. In order to apply a large load to the electrode material, it is necessary to increase the size and strength of a device or a member, which holds the electrode material. In addition, in a case where the large load is applied, the solid components and the liquid components of the electrode material may be separated from each other, and it may be difficult to form an electrode material film having a target thickness.

Therefore, the present disclosure has been made in view of the above-described circumstances.

An object of one embodiment of the present disclosure is to provide a manufacturing method of a molded body for a sheet-like electrode, which is capable of reducing a load applied to an electrode material and capable of manufacturing a molded body for a sheet-like electrode, having a target thickness.

The present disclosure includes the following aspects.
<1> A manufacturing method of a molded body for a sheet-like electrode, the manufacturing method comprising:
   a step A of dispersing and arranging, on a support, a plurality of bulk substances of an electrode material which contains an electrode active material and an electrolytic solution and has a concentration of solid components of 20% by volume to 90% by volume; and
   a step B of combining the plurality of bulk substances dispersed and arranged on the support by a molding member to form an electrode material film on the support.
<2> The manufacturing method of a molded body for a sheet-like electrode according to <1>,
   in which the electrode material film is formed on the support by combining the plurality of bulk substances dispersed and arranged on the support by the molding member relatively moving along a surface of the support while maintaining a constant distance from the surface of the support.
<3> The manufacturing method of a molded body for a sheet-like electrode according to <2>,
   in which, in a case where an average height of the plurality of bulk substances dispersed and arranged on the support is denoted by H and a distance between the molding member and the surface of the support is denoted by C, a ratio (H/C) of the height H to the distance C satisfies 1 < H/C ≤ 100.
<4> The manufacturing method of a molded body for a sheet-like electrode according to any one of <1> to <3>,
   in which a pressure applied to the electrode material (bulk substance) from the molding member is 10 kPa to 500 kPa.
<5> The manufacturing method of a molded body for a sheet-like electrode according to any one of <1> to <4>,
   in which, in the plurality of bulk substances dispersed and arranged on the support, a distance between area centroids of adjacent bulk substances is 0.1 mm to 50 mm.
<6> The manufacturing method of a molded body for a sheet-like electrode according to any one of <1> to <5>,
   in which a region occupied by the plurality of bulk substances dispersed and arranged on the support is 10% to 90% with respect to a region where the electrode material film is formed on the support.
<7> The manufacturing method of a molded body for a sheet-like electrode according to <1> to <6>,
   in which the step A is performed by scattering and supplying the plurality of bulk substances of the electrode material which contains an electrode active material and an electrolytic solution and has a concentration of solid components of 20% by volume to 90% by volume onto the support.
<8> The manufacturing method of a molded body for a sheet-like electrode according to any one of <1> to <7>,
   in which the step A and the step B are performed using a support which is continuously transported, and an electrode material film which is a continuous film is formed in the step B along a transport direction of the support.
<9> The manufacturing method of a molded body for a sheet-like electrode according to <7> or <8>,
   in which, in a case where a theoretical amount of the electrode material capable of forming an electrode material film which has the same thickness as a distance between the molding member and the surface of the support and has no gap is denoted by X and a supply amount of the bulk substances of the electrode material onto the support is denoted by Y, a ratio (Y/X) of the supply amount Y to the amount X satisfies 1 ≤ Y/X ≤ 5 on a volume basis.

According to one embodiment of the present disclosure, it is possible to provide a manufacturing method of a molded body for a sheet-like electrode, which is capable of reducing a load applied to an electrode material and capable of manufacturing a molded body for a sheet-like electrode, having a target thickness.

### BRIEF DESCRIPTION OF THE DRAWINGS

Fig. 1 is a schematic view showing an example of a form of bulk substances.
Fig. 2 is a schematic cross-sectional view of a case where a plurality of bulk substances are dispersed and arranged on a support and the support is cut along a thickness direction of the support.
Fig. 3 is a schematic top view of a top surface in a case where the plurality of bulk substances are dispersed and arranged on the support.
Fig. 4 is a schematic cross-sectional view for describing a method of combining the plurality of bulk substances dispersed and arranged on the support by a molding member.
Fig. 5 is a schematic top view for describing the method of combining the plurality of bulk substances dispersed and arranged on the support by the molding member.

### DESCRIPTION OF THE PREFERRED EMBODIMENTS

Hereinafter, embodiments of the present disclosure will be described with reference to the accompanying drawings. The present disclosure is not limited in any way to the following embodiments, and may be implemented with appropriate modifications within the scope of the purpose of the present disclosure. The constituent elements indicated by the same reference numeral in each drawing mean the same constituent element. The description of redundant constitutional elements and reference numerals in each drawing may be omitted. A dimensional ratio in the drawings does not necessarily represent the actual dimensional ratio.

In the present disclosure, the numerical ranges shown using "to" indicate ranges including the numerical values described before and after "to" as the lower limit value and the upper limit value. Regarding numerical ranges that are described stepwise in the present disclosure, an upper limit value or a lower limit value described in a numerical range may be replaced with an upper limit value or a lower limit value of another stepwise numerical range. In addition, in a numerical range described in the present disclosure, an upper limit or a lower limit described in a certain numerical range may be replaced with a value described in Examples.

In the present disclosure, a term "step" denotes not only an individual step but also a step which is not clearly distinguishable from another step as long as an effect expected from the step can be achieved.

In the present disclosure, "(meth)acrylic" means either or both of acrylic and methacrylic.

In the present disclosure, in a case where a plurality of substances corresponding to each component in a composition is present, the amount of each component in the composition means the total amount of the plurality of substances present in the composition, unless otherwise specified.

In the present disclosure, a combination of two or more preferred aspects or forms is a more preferred aspect or form.

In the present disclosure, "solid component" means a component in a solid state at 25°C and 1 atm, and "liquid component" means a component in a liquid state at 25°C and 1 atm.

In the present disclosure, a region where an electrode material film is formed on a support refers to, in the entire surface area of the support, a region where the electrode material film is formed by combining bulk substances of the electrode material, and corresponds to a region on the support where the electrode material film is covered. In a case where the support is a collector or a laminate of a collector and a resin film, the area of the collector is the region where the electrode material film is formed.

In addition, in the present disclosure, "width direction" in the support refers to a direction orthogonal to a longitudinal direction, and refers to a direction orthogonal to the longitudinal direction in a case of a long support.

Furthermore, "width direction" in a film forming member (for example, a blade) refers to a direction orthogonal to a direction in which the film forming member relatively is moved along a surface of a support (that is, a direction in which an electrode material film is formed on the support). That is, the "width direction" of the blade also corresponds to "width direction" of the electrode material film.

### <Manufacturing method of molded body for sheet-like electrode>

The manufacturing method of a molded body for a sheet-like electrode according to the present disclosure includes a step A of dispersing and arranging, on a support, a plurality of bulk substances of an electrode material which contains an electrode active material and an electrolytic solution and has a concentration of solid components of 20% by volume to 90% by volume, and a step B of combining the plurality of bulk substances dispersed and arranged on the support by a molding member to form an electrode material film on the support.

Hereinafter, the "electrode material which contains an electrode active material and an electrolytic solution and has a concentration of solid components of 20% by volume to 90% by volume" will also be simply referred to as "specific electrode material"; and the "molded body for a sheet-like electrode" will also be simply referred to as "molded body for an electrode".

The electrode material which contains an electrode active material and an electrolytic solution and has a concentration of solid components of 20% by volume to 90% by volume (that is, the specific electrode material) exhibits clay-like properties. The present inventors have conducted studies on a method for obtaining a molded body for a sheet-like electrode, having a target thickness, without applying a large load to an electrode material, using an electrode material exhibiting such clay-like properties.

As a result of the studies, a method of first dispersing and arranging a plurality of bulk substances of the electrode material exhibiting clay-like properties on a support, and then combining the plurality of bulk substances dispersed and arranged by a molding member to form an electrode material film is found. According to the method, it is considered that a contact area between the molding member and the bulk substance is small, and the load applied to the electrode material from the molding member is small. In addition, in a case where the plurality of bulk substances are combined, it is possible to form an electrode material film having a target thickness by adjusting the molding member.

As a result, in the manufacturing method of a molded body for an electrode according to the present disclosure, a molded body for a sheet-like electrode having a target thickness is manufactured while reducing the load applied to the electrode material.

In the manufacturing method of a molded body for an electrode according to the present disclosure, a molded body for a sheet-like electrode having a target thickness can be formed without applying a large load to the electrode material. As a result, it is possible to shorten the time required to apply the large load to the electrode material. In addition, it is not necessary to increase the size and strengthen a device or a member, which holds the electrode material in order to apply the large load to the electrode material.

In JP2014-186969A, the powder supplied onto the support is configured to contain a small amount of the electrolytic solution, which does not correspond to the specific electrode material.

In addition, JP2021-027043A does not disclose that a plurality of bulk substances dispersed and arranged on a support are combined by a molding member to form an electrode material film on the support.

### [Step A]

In the step A, a plurality of bulk substances of an electrode material which contains an electrode active material and an electrolytic solution and has a concentration of solid components of 20% by volume to 90% by volume (that is, the specific electrode material) are dispersed and arranged on a support.

### (Bulk substance)

In the present disclosure, the "bulk substance of an electrode material" refers to a granular substance (also referred to as a pellet) having a diameter of 0.1 mm to 20 mm, or a secondary particle thereof (that is, an aggregate). Here, the granular substance having a diameter of 0.1 mm to 20 mm is a particle consisting of a mixture containing at least the electrode active material and the electrolytic solution.

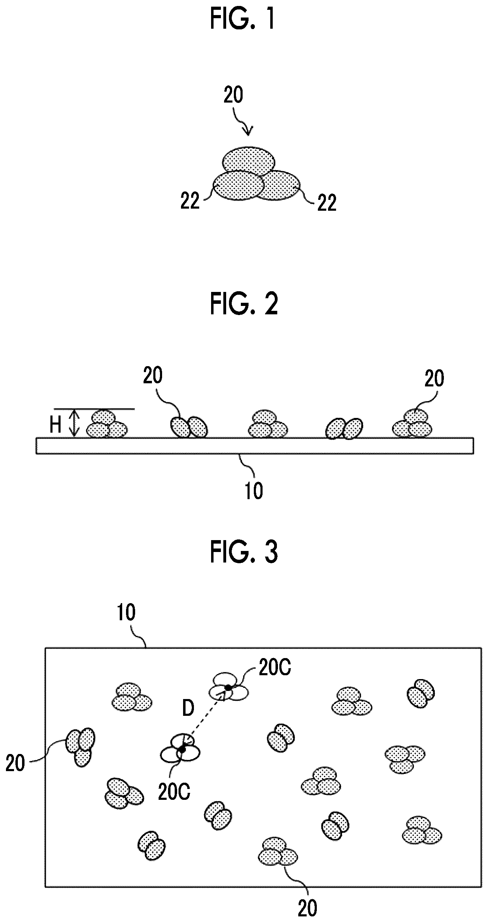

The bulk substance will be described with reference to Fig. 1. Here, Fig. 1 is a schematic view showing an example of a form of the bulk substances.

As shown in Fig. 1, the bulk substance 20 is, for example, an aggregate in which three granular substances 22 are aggregated. The number of the granular substances 22 included in the bulk substance 20 is not particularly limited.

Here, a known method of obtaining an equivalent circle diameter is used for measuring a diameter of the granular substance. That is, the diameter of the granular substance means an equivalent circle diameter of the granular substance.

In addition, a shape of the granular substance is not particularly limited, and may be a spherical shape, an ellipsoidal shape, a cylindrical shape, a flat plate shape, an irregular shape, or the like.

In the present step, as shown in Figs. 2 and 3, a plurality of bulk substances 20 are dispersed and arranged on a support 10. Here, Fig. 2 is a schematic cross-sectional view of a case where the plurality of bulk substances are dispersed and arranged on the support and the support is cut along a thickness direction of the support. In addition, Fig. 3 is a schematic top view of a top surface in a case where the plurality of bulk substances are dispersed and arranged on the support.

A diameter of the bulk substances dispersed and arranged on the support is, for example, preferably 0.1 mm to 20 mm, more preferably 0.5 mm to 10 mm, and still more preferably 1 mm to 5 mm.

A known method of obtaining an equivalent circle diameter is used for measuring the diameter of the bulk substance. That is, the diameter of the bulk substance means an equivalent circle diameter of the bulk substance.

An average height of the bulk substances dispersed and arranged on the support is, for example, preferably 0.1 mm to 10 mm, more preferably 0.5 mm to 10 mm, and still more preferably 1 mm to 5 mm.

The height of the bulk substances corresponds to "H" in Fig. 2. The height of the bulk substances is obtained by measurement using a laser displacement meter with the support as a reference. The measurement is performed for the number of bulk substances corresponding to 50% (rounded off to the nearest decimal place) randomly selected from the total number of bulk substances present in the region where the electrode material film is formed on the support, in a case where the total number of bulk substances is set to 100%, and an arithmetic mean value of the obtained measured values is defined as the "average height of the bulk substances".

In the plurality of bulk substances dispersed and arranged on the support, a distance between area centroids of adjacent bulk substances is preferably 0.1 mm to 50 mm, more preferably 1 mm to 20 mm, and still more preferably 5 mm to 10 mm.

The distance between area centroids of adjacent bulk substances corresponds to "D" in Fig. 3. The distance between area centroids of adjacent bulk substances is obtained by obtaining an image in a case where the support in a state in which the bulk substances are dispersed is viewed from the top surface, specifying one bulk substance (reference bulk substance) in the image, selecting an adjacent bulk substance (nearby bulk substance) closest to the granular substance, and measuring a distance between area centroids (20C in Fig. 3) of the bulk substances. In a case where the total number of bulk substances present in the region where the electrode material film is formed on the support is set to 100%, 25% by number (rounded off to the nearest decimal place) of the total number of bulk substances is selected as the above-described reference bulk substance. In a case of selecting the reference bulk substance, the reference bulk substance and the nearby bulk substance selected once are excluded. An arithmetic mean value of the obtained measured values is defined as the "distance between area centroids of adjacent bulk substances".

In addition, in a case of an aspect in which the electrode material film is continuously formed on the support being continuously transported along a transport direction of the support, a two-dimensional image which is obtained by connecting one-line images obtained by a line sensor camera provided along a width direction of the support as an image in a case where the support is viewed from the top surface may be used.

A region occupied by the plurality of bulk substances dispersed and arranged on the support (hereinafter, also referred to as an area ratio of the bulk substances) is preferably 10% to 90%, more preferably 10% to 40%, and still more preferably 10% to 20% with respect to the region where the electrode material film is formed on the support.

Here, the region where the electrode material film is formed on the support refers to, in the entire surface area of the support, a region where the electrode material film is formed by combining bulk substances of the electrode material, and corresponds to a region on the support where the electrode material film is covered. In a case where the support is a collector or a laminate of a collector and a resin film, an area of the collector is the region where the electrode material film is formed.

The area ratio of the bulk substances is determined as follows.

That is, first, an image in a case where the support in a state in which the bulk substances are dispersed is viewed from the top surface is obtained, the image is subjected to binarization processing, and an area occupied by the bulk substances on the support is calculated. The area ratio of the bulk substances is obtained by introducing the calculated area occupied by the bulk substances into an expression: Area occupied by bulk substances/Region where electrode material film is formed on support × 100.

In addition, in a case of an aspect in which the electrode material film is continuously formed on the support being continuously transported along a transport direction of the support, in the same manner as in a case of obtaining the distance between area centroids of adjacent bulk substances, a two-dimensional image obtained by using a line sensor camera may be used as an image in a case of viewing the support from the top surface.

In the step A, a method of dispersing and arranging the plurality of bulk substances of the specific electrode material on the support is not particularly limited, but from the viewpoint of easily adjusting the size of the bulk substance, the viewpoint of easily adjusting a dispersion degree of the bulk substances, and the viewpoint of stabilizing a supply amount, it is preferable to perform the following method.

That is, it is preferable that the step A is performed by scattering and supplying the plurality of bulk substances of the specific electrode material onto the support. That is, by scattering and supplying the plurality of bulk substances of the specific electrode material onto the support, the plurality of bulk substances of the specific electrode material can be dispersed and arranged on the support.

The plurality of bulk substances of the specific electrode material used for the above-described scattering supply can be produced by a known granulating method capable of granulating with the specific electrode material.

Examples of the granulating method include an extrusion granulation method, a pulverization granulation method, a compression granulation method, a wet (aggregation) granulation method, and a granulation method using a die.

The bulk substance obtained by the granulating method is scattered and supplied onto the support by known transporting and supplying units.

In addition, the scattering supply can be carried out by relatively moving the supply unit along the surface of the support.

### (Specific electrode material)

Details of the specific electrode material used in the step A will be described later.

### [Step B]

In the step B, the plurality of bulk substances dispersed and arranged on the support are combined by a molding member to form an electrode material film on the support.

In particular, in the step B, it is preferable that the electrode material film is formed on the support by combining the plurality of bulk substances dispersed and arranged on the support by the molding member relatively moving along the surface of the support while maintaining a constant distance from the surface of the support.

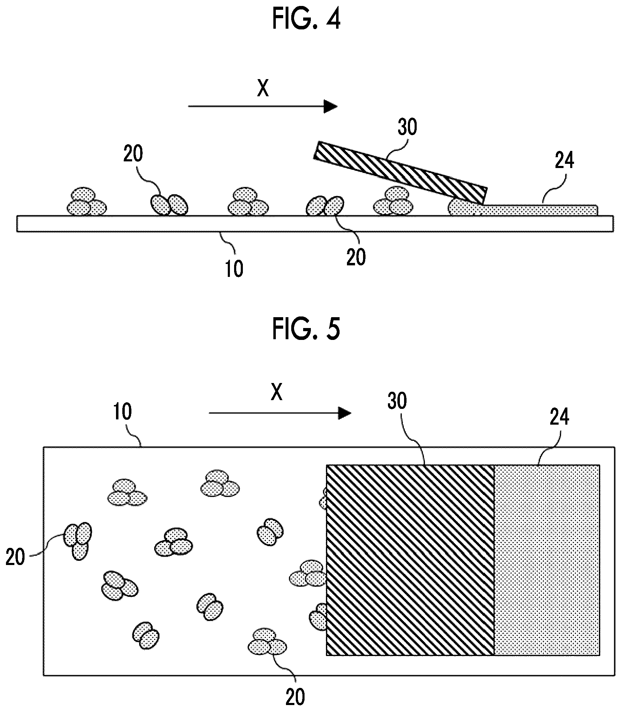

The step B will be described with reference to Figs. 4 and 5. Here, Fig. 4 is a schematic cross-sectional view for describing a method of combining the plurality of bulk substances dispersed and arranged on the support by a molding member. In addition, Fig. 5 is a schematic top view for describing the method of combining the plurality of bulk substances dispersed and arranged on the support by the molding member.

As shown in Fig. 4, a blade (an example of the molding member) 30 is installed so as to maintain a constant distance from the surface of the support 10. Hereinafter, a distance between a tip part of the blade 30 (specifically, a corner portion of the blade 30 closest to the surface of the support 10) and the surface of the support 10 is also referred to as "distance C". In other words, a gap having a distance C is formed between the surface of the support 10 and the tip part of the blade 30.

As shown in Fig. 4, in a case where the support 10 is moved in the arrow X direction, the bulk substances 20 dispersed and arranged on the support 10 come into contact with the blade 30. Each of the plurality of bulk substances 20 in contact with the blade 30 is spread on the support 10 in a direction opposite to the width direction of the support 10 (corresponding to a depth direction in Fig. 4) and opposite to the arrow X direction. As a result, the plurality of bulk substances 20 spread on the support 10 are combined with each other, and an electrode material film 24 is formed as shown in Figs. 4 and 5. In this case, as shown in Fig. 4, the distance between the blade 30 and the surface of the support 10, that is, the distance C is smaller than the height of the bulk substance 20, so that the bulk substances 20 efficiently come into contact with the blade 30, and the bulk substances 20 spread on the support 10 are combined with each other.

In addition, as the bulk substances 20 dispersed and arranged on the support 10 pass through the void having a distance C, a load is applied to the bulk substances 20 and a thickness is regulated, so that the electrode material film 24 having the same thickness as the distance C is formed.

The electrode material film 24 formed as described above is not limited to the aspect having a width equal to the width of the blade 30 as shown in Fig. 5. By adjusting the arrangement of the bulk substances 20 on the support 10, the supply amount, and the like, the width of the electrode material film 24 can be made smaller than the width of the blade 30, or can be made equal to the width of the blade 30.

An installation position of the blade may be set based on the above-described distance C which is set according to a film thickness of the electrode material film to be formed. The expression "so as to maintain a constant distance from the surface of the support" means that the distance between the surface of the support and a distal end of the center portion of the blade in the width direction is substantially kept constant in a case where the blade is relatively moved along the surface of the support. In the "so as to maintain a constant distance from the surface of the support", for example, the amplitude of the blade generated by the vibration of the blade is allowed. In addition, the "so as to maintain a constant distance from the surface of the support" also includes a position change of the surface of the support in a case where the support is transported (floating of the support and position change caused by wrinkles generated on the support), surface roughness on the surface of the support, and the like. From these, a variation value of the distance between the surface of the support and the tip part of the blade in a case where the blade is relatively moved along the surface of the support in a state in which the blade is stopped may be within 3% or 20 µm or less with respect to the distance (that is, a height of the void) between the surface of the support and the tip part of the blade, and this is allowed in the case of the "so as to maintain a constant distance from the surface of the support".

In addition, the distance (that is, the height of the void) between the surface of the support and the tip part of the blade may be slightly distributed in the width direction, but in a case where the distribution is within 3% or 20 µm, this is allowed in the case.

It is preferable that the blade is connected to a pressurizing unit (not shown). In addition, it is preferable that the blade is pressed toward the support side by the pressurizing unit so as to maintain the constant distance C even in a situation in which the blade is in contact with the bulk substances and a situation in which the blade is relatively moved along the surface of the support. In addition, it is preferable that the blade is pressed with a pressure so as to face a repulsive force from the bulk substances in contact with the blade (that is, a force with which the bulk substances pushes the blade) so as to maintain the constant distance C. In a case of adopting such an aspect, an electrode material film having a small variation in thickness is formed.

In addition, the electrode material film is formed by the passage of the bulk substances through the void having a distance C, but at this time, it is preferable that at least a contact portion of the blade with the bulk substances vibrates. In a case where the contact portion of the blade with the bulk substances vibrates, the vibration propagates to the bulk substances, and a shearing force is applied to the bulk substances. It is presumed that the bulk substances subjected to the shearing force have a decreased viscosity or improved fluidity, and thus the bulk substances are promoted to be combined with each other. In addition, in this aspect, a surface state of the electrode material film to be formed is improved, and an electrode material film having a small variation in thickness is formed.

An exciter for vibrating the blade is not particularly limited as long as at least the contact portion of the blade with the bulk substances can be vibrated; and examples thereof include an air type vibrator, a motor type vibrator, a piezoelectric oscillator, and an ultrasonic oscillator.

Figs. 4 and 5 show an aspect in which the support 10 is transported and moved in the arrow X direction with respect to the fixed blade 30, but the present invention is not limited to this aspect.

In the manufacturing method of a molded body for an electrode according to the present disclosure, it is sufficient that the surface of the support and the blade are moved relative to each other, and in addition to the above-described aspect, the blade may be moved in one direction with respect to a fixed support, or both the support and the blade may be moved in one direction.

However, in order to continuously form the electrode material film, that is, in order to form an electrode material film which is a continuous film, an aspect in which a long support is transported and moved with respect to the fixed blade is preferable.

In addition, Figs. 4 and 5 show an aspect in which the blade is used as the molding member, but the present invention is not limited to this aspect.

Examples of the molding member include a roller, in addition to the blade. In a case where the molding member is a roller, the roller may be installed so as to maintain a constant distance from the surface of the support body, as in the blade.

The roller rotates while coming into contact with the plurality of bulk substances dispersed and arranged on the support, and the bulk substances can be extended on the support. As a result, the plurality of bulk substances spread on the support are combined with each other, and an electrode material film is formed.

### (Ratio (H/C))

In the step B, from the viewpoint of facilitating the combining of the bulk substances, in a case where an average height of the plurality of bulk substances dispersed and arranged on the support is denoted by H and a distance between the molding member and the surface of the support is denoted by C (corresponding to the above-described distance C), a ratio (H/C) of the height H to the distance C preferably satisfies 1 < H/C ≤ 100, more preferably satisfies 1 < H/C ≤ 50, and still more preferably satisfies 1 < H/C ≤ 10.

Here, the distance C is obtained by measurement using a laser displacement meter with a height at which the blade comes into contact with the support as a reference. In addition, the distance C may be measured using a mechanical gauge.

### (Pressure applied to electrode material)

In the step B, in a case where the bulk substances are brought into contact with the molding member, a pressure is applied to the bulk substances, that is, the specific electrode material from the molding member. At this case, the pressure applied to the bulk substances, that is, the specific electrode material in contact with the molding member is preferably 10 kPa to 500 kPa, more preferably 10 kPa to 100 kPa, and still more preferably 10 kPa to 20 kPa.

Here, the pressure applied to the electrode material is obtained by the following method.

That is, the pressure is obtained by, using an actuator (an air cylinder, a motor-driven linear actuator, a piezoelectric element, or the like), dividing the force of the actuator by a pressure-receiving surface area of the electrode material in a case where the molding member is pressed against the bulk substances (that is, the electrode material) dispersed and arranged on the support, and the molding member is relatively moved along the surface of the support, thereby forming an electrode material film having a target thickness.

Examples of a method of changing the pressure applied to the bulk substances, that is, the specific electrode material in contact with the molding member include a method of adjusting one or more of the distance between the surface of the support and the molding member, the pressure with which the molding member is pressed against the surface of the support, the self weight of the molding member, and the like.

### (Preferred aspect)

In the manufacturing method of a molded body for an electrode according to the present disclosure, it is preferable that the step A and the step B are performed using a support which is continuously transported, and an electrode material film which is a continuous film is formed in the step B along a transport direction of the support. In addition, it is preferable that the step A is performed by scattering and supplying the plurality of bulk substances of the specific electrode material onto the support which is continuously transported.

In the preferred aspect, the electrode material film is continuously formed on the support which is continuously transported, along the transport direction of the support.

By adopting the aspect, the electrode material film can be formed with high productivity.

In addition, with regard to the preferred aspect, it is preferable that, in a case where a theoretical amount of the electrode material capable of forming an electrode material film which has the same thickness as a distance between the molding member and the surface of the support and has no gap is denoted by X and a supply amount of the bulk substances of the electrode material onto the support is denoted by Y, a ratio (Y/X) of the supply amount Y to the amount X satisfies 1 ≤ Y/X ≤ 5 on a volume basis.

In the aspect in which the electrode material film is continuously formed along the transport direction of the support, the value of the ratio (Y/X) may be appropriately adjusted within the above-described range.

Here, the value of the ratio (Y/X) can be adjusted by changing the supply amount Y. The supply amount Y may be the same or different during the step A.

Here, the theoretical amount X of the electrode material is obtained from X [mm³/sec] = T × W × V in a case where the thickness of the electrode material film to be formed is denoted by T [mm], the width of the electrode material film is denoted by W [mm], and a film formation speed (that is, a transportation speed of the support) is denoted by V [mm/sec].

In addition, the supply amount Y [mm³/sec] is obtained from a flow rate of the supply unit (for example, a pump, a feeder, or the like) which supplies the electrode material.

### [Other steps]

The manufacturing method of a molded body for an electrode according to the present disclosure may include other steps.

Examples of the other steps include a step of pressurizing the electrode material film, and a step of, in a case where the support is release paper, transferring the electrode material film formed on the release paper to a collector.

### (Step of pressurizing electrode material film)

The manufacturing method of a molded body for an electrode according to the present disclosure may include a step of pressurizing the electrode material film obtained in the step B.

In a case where the manufacturing method of a molded body for an electrode according to the present disclosure includes the pressurization step, a density of the electrode material can be increased, and in-plane uniformity of density and thickness can be achieved.

Examples of a pressurizing unit used in the present step include a pair of pressurizing rolls and a press machine.

In a case of pressurizing the electrode material film, a pressure is preferably 0.01 MPa to 100 MPa, more preferably 0.1 MPa to 50 MPa, and particularly preferably 0.2 MPa to 10 MPa.

In the present step, the electrode material film may be pressurized stepwise using a plurality of pressurizing units (for example, pairs of pressurizing rolls). By stepwise pressurizing the electrode material film using a plurality of pressurizing units, the density and thickness of the electrode material can be made more uniform.

For example, the electrode material film can be pressurized stepwise using a plurality of pairs of pressurizing rolls, in which a gap between the rolls is stepwise adjusted to be narrowed.

In the present step, it is preferable to move the pressurizing unit and the electrode material film (specifically, the support on which the electrode material film has been formed) relative to each other.

In the present disclosure, "move the pressurizing unit and the electrode material film relative to each other" includes moving the pressurizing unit in one direction with respect to the electrode material film, moving the electrode material film in one direction with respect to the pressurizing unit, and moving the pressurizing unit and the electrode material film in one direction, respectively; but it is preferable to move the electrode material film in one direction with respect to the pressurizing unit.

A unit for moving the electrode material film (specifically, the support on which the electrode material film has been formed) is not limited, and known transport units can be used. Examples thereof include a belt conveyor, a linear motion guide, and a cross roller table.

In the present step, from the viewpoint of improving formability, for example, the electrode material film heated at 30°C to 100°C may be pressurized.

Hereinafter, the support, the molding member, and the electrode material, which are used in the manufacturing method of a molded body for an electrode according to the present disclosure, will be described in detail.

### [Support]

The support used in the present step is not particularly limited as long as it is a support capable of forming an electrode material film on the surface. In particular, from the viewpoint of continuously forming the electrode material film, it is preferable to use a long support. In a case of the long support, a width thereof may be determined according to the size of the electrode material film and the width (length) of the center portion of the molding member (for example, the blade) in the width direction.

### Specific examples of a preferred support include a collector.

The collector which is an example of the support is not particularly limited, and a known collector (a positive electrode collector and a negative electrode collector) can be used.

Examples of the positive electrode collector include aluminum, an aluminum alloy, stainless steel, nickel, and titanium. The positive electrode collector is preferably aluminum or an aluminum alloy. The positive electrode collector may be aluminum having, on a surface thereof, a coating layer containing one or more of carbon, nickel, titanium, silver, gold, platinum, and vanadium oxide.

Examples of the negative electrode collector include aluminum, copper, a copper alloy, stainless steel, nickel, and titanium. The negative electrode collector is preferably aluminum, copper, a copper alloy, or stainless steel, and more preferably copper or a copper alloy. The negative electrode collector may be copper or stainless steel, having, on a surface thereof, a coating layer containing one or more of carbon, nickel, titanium, silver, and lithium.

The collector is preferably an aluminum foil (including an aluminum foil having the above-described coating layer on the surface thereof) or a copper foil (including a copper foil having the above-described coating layer on the surface thereof). The aluminum foil is generally used as a collector in a positive electrode. The copper foil is generally used as a collector in a negative electrode.

In addition, the support may be a laminate of the metal layer exemplified as the positive electrode collector or the negative electrode collector described above and a resin film. Examples of the resin film used in the laminate include resin films such as a polyethylene terephthalate (PET) film, a polypropylene (PP) film, a polyethylene (PE) film, a cyclic olefin polymer (COP or COC) film, a triacetyl cellulose (TAC), a polyimide (PI) film, and a polyamide (PA) film.

In addition, examples of the support include a release material.

Examples of the release material which is an example of the support include release paper (for example, peeling paper manufactured by LINTEC Corporation), a film having a release layer, and paper having a release layer; and among these, release paper is preferable.

In a case where the release material is used as the support, the electrode material film formed on the release material can be transferred to the collector by utilizing releasability of the release material.

From the viewpoint of transportability and the like, an average thickness of the support (preferably, the collector) is preferably 3 µm or more, more preferably 5 µm or more, and particularly preferably 10 µm or more.

From the viewpoint of flexibility and lightness, the average thickness thereof is preferably 100 µm or less, more preferably 70 µm or less, and particularly preferably 50 µm or less.

The average thickness of the support is an arithmetic average of thicknesses at three points measured by cross-sectional observation. In the cross-sectional observation, a known microscope (for example, a scanning electron microscope) can be used.

A size of the support is not limited, and may be determined according to the size of the molded body for an electrode to be manufactured, the size of various members used in the manufacturing process, and the like.

In addition, in the present step, a transport mechanism of the support is not limited, and a known transport unit can be used.

As the transport mechanism of the support, for example, a belt conveyor, a linear motion guide, a cross roller table, or the like can be used.

### [Molding member]

Examples of the molding member include a blade and a roller. Among these, from the viewpoint of effectively combining the bulk substances, a blade is preferable.

### (Blade)

The blade is a member having a plate-like shape, but the shape, size, material, and the like of a contact portion which comes into contact with the bulk substances may be appropriately determined depending on the type of the electrode material (the kind of the electrode active material, the concentration of solid components, the composition (viscosity, surface tension, and the like) of the electrolytic solution, and the like), the size and thickness of the electrode material film to be formed, and the like.

In addition, it is preferable that the contact portion of the blade with the bulk substances is less likely to have the electrode material adhere thereto; and for example, at least the surface of the blade preferably exhibits releasability.

For example, the blade may be made of a fluororesin such as polytetrafluoroethylene (PTFE) or a resin such as polyether ether ketone (PEEK), may be made of a metal such as stainless steel, aluminum, iron, or a hard alloy, or may be made of a ceramic.

In addition, in order to impart the releasability to the surface, the blade may include a surface layer (for example, a surface layer containing a fluorine-based resin, and a surface layer containing silicon-based particles and a resin) exhibiting the releasability.

Furthermore, from the viewpoint of improving abrasion resistance, the blade may include a high-hardness coating film such as titanium oxide, titanium nitride (TiN), and tungsten carbide on a metal or ceramic blade body.

In the present step, from the viewpoint of obtaining an electrode material film with less variation in thickness, it is preferable that a friction coefficient µ1 between the contact portion of the blade with the bulk substances and the electrode material is smaller than a frictional coefficient µ2 between the electrode material and the support.

As described above, it is presumed that, by satisfying the relationship of the friction coefficient µ1 < the friction coefficient µ2, the bulk substance, that is, the electrode material is likely to migrate to the support side, and as a result, the electrode material film with less variation in thickness is obtained.

The friction coefficient µ1 and the friction coefficient µ2 described above are obtained by forming an electrode material layer from the electrode material, and measuring a friction coefficient between the electrode material layer and the blade or the support.

Specifically, first, a cell (a cylinder with a size having a diameter of 20 mm to 30 mm and a height of 20 mm to 30 mm) is filled with 5 g to 20 g of the electrode material, and voids in the electrode material are removed (that is, air is removed) to form an electrode material layer.

The obtained electrode material layer is placed on the blade or the support, and a weight of 100 g to 1,000 g is further placed on the electrode material layer. Thereafter, the electrode material layer is laterally slid on the blade or the support using a tensile tester (lateral sliding speed: 5 mm/sec). From a relational expression obtained by plotting a relationship between a load in the vertical direction by the weight and a drag force measured by the tensile tester, which is obtained by the lateral slip, the friction coefficient is obtained.

In a case where the blade or the support cannot be applied as it is to the above-described measurement, only the surface of the blade or the support may be taken out, or a measurement sample having the same composition and surface properties as the surface of the blade or the support may be prepared and used for the measurement.

The above-described measurement is carried out in an environment of a dry room at 21°C and 0 %RH (dew point temperature: -60°C).

### (Roller)

The roller is a member in which an outer peripheral surface is rotatable, but the shape, size, material, and the like of the roller may be appropriately determined depending on the type of the electrode material (the kind of the electrode active material, the concentration of solid components, the composition (viscosity, surface tension, and the like) of the electrolytic solution, and the like), the size and thickness of the electrode material film to be formed, and the like.

The material constituting the outer peripheral surface of the roller may be the same as that of the blade, and may have a surface layer exhibiting releasability.

An outer diameter of the roller is not particularly limited, but may be, for example, 20 mm to 30 mm.

In addition, since the roller rotates, a friction coefficient between the outer peripheral surface of the roller and the bulk substance can be considered to be 0. As a result, since adhesiveness to the bulk substance (that is, the electrode material) may be increased, it is preferable to interpose a release paper between the bulk substance and the outer peripheral surface of the roller.

### [Specific electrode material]

Hereinafter, the specific electrode material will be described in detail.

The specific electrode material contains at least an electrode active material and an electrolytic solution, and has a concentration of solid components of 20% by volume to 90% by volume. The concentration of solid contents of the specific electrode material is preferably 30% by volume to 80% by volume, more preferably 40% by volume to 70% by volume, and still more preferably 40% by volume to 60% by volume.

### (Electrode active material)

The electrode active material is a substance capable of intercalating and deintercalating ions of a metal element belonging to Group 1 or Group 2 in the periodic table. The electrode active material is included in the solid components.

Examples of the electrode active material include a positive electrode active material and a negative electrode active material.

### -Positive electrode active material-

The positive electrode active material is not limited, and a known electrode active material used for a positive electrode can be used. The positive electrode active material is preferably a positive electrode active material capable of reversibly intercalating and deintercalating lithium ions.

Specific examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B). A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxide having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic vanadium phosphate salt (for example, Li₃V₂(PO₄)₃ (lithium vanadium phosphate)).

Examples of the lithium-containing transition metal halogenated phosphoric acid compound include an iron fluorophosphate (for example, Li₂FePO₄F), a manganese fluorophosphate (for example, Li₂MnPO₄F), and a cobalt fluorophosphate (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), and LiNi_{1/3}Co_{1/3}Mn_{1/3}O₂ (lithium nickel manganese cobalt oxide [NMC]).

The positive electrode active material may be a commercially available product, or may be a synthetic product produced by a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handleability, it is preferably a particle shape.

A volume average particle diameter of the positive electrode active material is not limited, and can be, for example, 0.1 µm to 50 µm. The volume average particle diameter of the positive electrode active material is preferably 0.3 µm to 40 µm and more preferably 0.5 µm to 30 µm.

In a case where the volume average particle diameter of the positive electrode active material is 0.3 µm or more, it is possible to easily form aggregates of the electrode material, and it is possible to suppress scattering of the electrode material during handling. In a case where the volume average particle diameter of the positive electrode active material is 40 µm or less, the thickness of the molded body for an electrode can be easily adjusted, and generation of voids in the molding process can be suppressed.

The volume average particle diameter of the positive electrode active material is measured by the following method.

A dispersion liquid containing 0.1% by mass or less of the positive electrode active material is prepared by mixing the positive electrode active material with a solvent (for example, pure water, ethanol, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-960 manufactured by Horiba, Ltd.), data is taken in 50 times under a condition of a temperature of 25°C, and a volume average particle diameter is obtained from a volume frequency-particle size distribution. A quartz cell is used as a cell for the measurement. The above-described measurement is carried out using five samples, and an average of the measured values is defined as the volume average particle diameter of the positive electrode active material. For other detailed conditions, "JIS Z 8828: 2013" is referred to as necessary.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

The electrode material to be produced may contain only one kind of the positive electrode active material or may contain two or more kinds of the positive electrode active materials.

In addition, even in a case where the electrode material to be produced contains one kind of the positive electrode active material, positive electrode active materials having different particle diameters may be used in combination.

A content of the positive electrode active material with respect to the total volume of the electrode material to be produced is preferably 30% by volume to 60% by volume, more preferably 35% by volume to 55% by volume, and still more preferably 40% by volume to 50% by volume.

### -Negative electrode active material-

The negative electrode active material is not limited, and a known electrode active material used for a negative electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In). Among the above, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin). Examples of the carbonaceous material also include carbon fiber (for example, polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber). Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide (Li₄Ti₅O₁₂ [LTO]).

The negative electrode active material may be a commercially available product, or may be a synthetic product produced by a known method (for example, a baking method). For example, a negative electrode active material obtained by the baking method may be washed with water, an acidic aqueous solution, an alkaline aqueous solution, or an organic solvent.

The negative electrode active material is available, for example, as CGB20 (Nippon Kokuen Group).

The composition of the negative electrode active material is measured by inductively coupled plasma (ICP) emission spectroscopy.

A shape of the negative electrode active material is not limited, but is preferably a particle shape from the viewpoint of ease of handling and ease of managing uniformity in a case of mass production.

A volume average particle diameter of the negative electrode active material is preferably 0.1 µm to 60 µm, more preferably 0.3 µm to 50 µm, and particularly preferably 0.5 µm to 40 µm.

The volume average particle diameter of the negative electrode active material is measured by a method based on the method of measuring the volume average particle diameter of the positive electrode active material described above.

Examples of a method of adjusting the particle diameter of the negative electrode active material include a method of using a pulverizer or a classifier.

The electrode material to be produced may contain only one kind of the negative electrode active material or may contain two or more kinds of the negative electrode active materials.

A content of the negative electrode active material with respect to the total volume of the electrode material to be produced is preferably 30% by volume to 60% by volume, more preferably 35% by volume to 57% by volume, and still more preferably 45% by volume to 55% by volume.

Surfaces of the positive electrode active material and the negative electrode active material may be coated with a surface coating agent, respectively. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

### (Electrolytic solution)

The electrolytic solution is not particularly limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

As the electrolyte contained in the electrolytic solution, for example, a known inorganic solid electrolyte can also be used.

As a component of the electrolytic solution, for example, an ionic liquid may be used. The ionic liquid may be used as the electrolyte or the solvent.

A content of the electrolytic solution with respect to the total volume of the electrode material to be produced is preferably 80% by volume or less, more preferably 70% by volume or less, and still more preferably 60% by volume or less. In a case where the content of the electrolytic solution in the electrode material is 80% by volume or less, it is possible to suppress the electrolytic solution from bleeding out in a case where the electrode material is molded.

The lower limit of the content of the electrolytic solution in the electrode material may be more than 0% by volume, and it is preferably 10% by volume or more.

The electrode material to be produced may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent at normal pressure (that is, 1 atm) is preferably 50°C or higher, and more preferably 70°C or higher. The upper limit of the boiling point of the solvent at normal pressure (that is, 1 atm) is preferably 250°C or lower, and more preferably 220°C or lower.

The electrode material to be produced may contain only one kind of the solvent or may contain two or more kinds of the solvents.

A content of the liquid components (that is, the electrolytic solution and the solvent) with respect to the total volume of the electrode material to be produced is preferably 80% by volume or less, more preferably 70% by volume or less, and still more preferably 60% by volume or less.

In a case where the content of the liquid components in the electrode material is 80% by volume or less, it is possible to suppress the liquid components from bleeding out in a case where the electrode material is molded. In addition, in a case where the liquid components includes the solvent, deterioration in battery performance can be suppressed.

The lower limit of the content of the liquid components in the electrode material may be more than 0% by volume, and it is preferably 10% by volume or more.

The liquid component in the electrode material, that is, the component in the electrode material, which is in a liquid state at 25°C, is preferably in a liquid state even at -10°C and preferably in a liquid state even at -20°C. That is, the component in the electrode material, which is in a liquid state at 25°C, is preferably a component which does not solidify at -10°C, and preferably a component which does not solidify at -20°C.

### (Conductive auxiliary agent)

From the viewpoint of improving electron conductivity of the electrode active material, the electrode material to be produced preferably contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The electrode material to be produced may contain only one kind of the conductive auxiliary agent or may contain two or more kinds of the conductive auxiliary agents.

In a case where the electrode material to be produced contains the conductive auxiliary agent, from the viewpoint of improving the electron conductivity of the electrode active material, a content of the conductive auxiliary agent with respect to the total volume of the electrode material is preferably 0.05% by volume to 5% by volume, more preferably 0.1% by volume to 4% by volume, and still more preferably 0.5% by volume to 3% by volume.

### (Other components)

The electrode material to be produced may contain a binder, a dispersant, and other additives in addition to the above-described components.

Examples of the binder include a fluorine-containing resin, a hydrocarbon-based thermoplastic resin, an acrylic resin, and a urethane resin.

In addition, the dispersant may be a known dispersant which can disperse a dispersion target.

Furthermore, as the other additives, known additives added to the electrode material can be used.

### (Method of preparing electrode material)

The electrode material can be prepared, for example, by mixing the electrode active material, the electrolytic solution, and other components used as necessary.

Examples of the mixing method include a method using a ball mill, a beads mill, a planetary mixer, a blade mixer, a roll mill, a kneader, or a disc mill.

### <<Molded body for sheet-like electrode>>

The molded body for a sheet electrode obtained by the manufacturing method of a molded body for a sheet-like electrode according to the present disclosure can be used as various electrodes.

The molded body for a sheet-like electrode is preferably a molded body for an electrode of a semi-solid state secondary battery.

From the viewpoint of improving battery performance (for example, a discharge capacity and output characteristics), an average thickness of the molded body for a sheet-like electrode is preferably 0.01 mm to 2 mm, more preferably 0.05 mm to 1.5 mm, and particularly preferably 0.1 mm to 1 mm.

The average thickness of the molded body for an electrode is measured by the same method as the average thickness of the support.

### Examples

Hereinafter, the present disclosure will be described in detail with reference to Examples, but the present disclosure is not limited thereto.

### [Preparation of positive electrode material (P1)]

(1) LiPF₆ (electrolyte) was mixed with a mixed solution obtained by mixing ethylene carbonate (EC), propylene carbonate (PC), and diethyl carbonate (DEC), and then vinylene carbonate (VC) was further mixed therewith; 64 g of the obtained mixed solution was taken out, and used as an electrolytic solution X1.
(2) 2 g of a conductive auxiliary agent (Ketjen black) and 174 g of a positive electrode active material (iron phosphate) were stirred at 1,500 revolutions per minute (rpm; the same applies hereinafter) for 30 seconds with a mixer (AWATORI RENTARO ARE-310, manufactured by THINKY Corporation) to prepare a kneaded material Y1 (176 g).
(3) The electrolytic solution X1 (64 g) was added to the kneaded material Y1 (176 g), and the mixture was stirred at 1,500 rpm for 120 seconds with a mixer (AWATORI RENTARO ARE-310, manufactured by THINKY Corporation) to obtain a positive electrode material (P1).

In the obtained positive electrode material (P1), a volume ratio of the solid components and the liquid components was 48:52.

Using the positive electrode material (P1), bulk substances (P1) containing a granular substance having a columnar shape (diameter: 3 mm to 5 mm) was obtained by extrusion molding using a mincer (manufactured by Bonny Co.,LTD.).

### [Preparation of support]

Support (S1): positive electrode collector (aluminum foil)

### [Preparation of molding member]

Blade (B 1): blade made of stainless steel

### <Example 1>

The bulk substances (P1) prepared in advance were scattered and supplied onto the support (S1) being continuously transported, and a plurality of bulk substances were dispersed and disposed on the support (step A).

The plurality of bulk substances dispersed and arranged on the support had an average height of 3 mm, a diameter of 3 mm to 5 mm, a distance (distance D) between area centroids of adjacent bulk substances of 10 mm, and an area ratio of 15%.

As shown in Figs. 4 and 5, the blade 30 was disposed such that a distance C between the surface of the support 10 and the distal end of the blade 30 was 0.3 mm. Next, as shown in Figs. 4 and 5, the support 10 was transported and moved in the arrow X direction, and the plurality of bulk substances 20 dispersed and arranged on the support 10 were brought into contact with the blade 30 to pass through the void having a distance C. As a result, the electrode material film 24 which is a continuous film was formed on the support 10 along the transport direction (arrow X direction) of the support 10. The obtained electrode material film 24 had a film thickness of 0.3 mm.

As described above, the ratio (H/C) was 10. In addition, in a case of forming the electrode material film which is a continuous film, the ratio (Y/X) satisfied 1 ≤ Y/X ≤ 5 on a volume basis.

In Example 1, the pressure applied from the blade which is the molding member to the electrode material (bulk substance (P1)) was 100 kPa.

### <Comparative Example 1>

A hopper shown in Fig. 2 of JP2021-027043A was prepared. The hopper had a nozzle having an opening width of 200 mm and an opening height of 1 mm for discharging the electrode material. The positive electrode material (P1) was put into the hopper, and the positive electrode material (P1) was discharged from the nozzle onto the support being transported and moved. As a result, an electrode material film having a film thickness of 1 mm was formed on the support.

In Comparative Example 1, the pressure applied to the electrode material in a case of being discharged from the nozzle was 10,000 kPa.

As described above, it was found that the pressure applied to the electrode material (bulk substance) from the molding member in Example 1 is 100 times or more the pressure applied to the electrode material in Comparative Example 1.

From the above, it was found that, in the manufacturing method of a molded body for a sheet-like electrode according to the present disclosure, it was possible to manufacture a molded body for a sheet-like electrode having a target thickness while reducing the load applied to the electrode material.

### Explanation of References

10: support
20: bulk substance
20C: area centroid
22: granular substance
24: electrode material film
30: blade
C: distance between blade and surface of support
D: distance between area centroids of adjacent bulk substances
H: height of bulk substance
X: transport direction of support

The disclosure of JP2022-120971 filed on July 28, 2022 is incorporated in the present specification by reference. All documents, patent applications, and technical standards described in the present specification are incorporated herein by reference to the same extent as in a case of being specifically and individually noted that individual documents, patent applications, and technical standards are incorporated herein by reference.

## Claims

1. A manufacturing method of a molded body for a sheet-like electrode, the manufacturing method comprising:
a step A of dispersing and arranging, on a support, a plurality of bulk substances of an electrode material which contains an electrode active material and an electrolytic solution and has a concentration of solid components of 20% by volume to 90% by volume; and
a step B of combining the plurality of bulk substances dispersed and arranged on the support by a molding member to form an electrode material film on the support.

2. The manufacturing method of a molded body for a sheet-like electrode according to claim 1,
wherein the electrode material film is formed on the support by combining the plurality of bulk substances dispersed and arranged on the support by the molding member relatively moving along a surface of the support while maintaining a constant distance from the surface of the support.

3. The manufacturing method of a molded body for a sheet-like electrode according to claim 2,
wherein, in a case where an average height of the plurality of bulk substances dispersed and arranged on the support is denoted by H and a distance between the molding member and the surface of the support is denoted by C, a ratio (H/C) of the height H to the distance C satisfies 1 < H/C ≤ 100.

4. The manufacturing method of a molded body for a sheet-like electrode according to claim 1 or 2,
wherein a pressure applied to the electrode material from the molding member is 10 kPa to 500 kPa.

5. The manufacturing method of a molded body for a sheet-like electrode according to claim 1 or 2,
wherein, in the plurality of bulk substances dispersed and arranged on the support, a distance between area centroids of adjacent bulk substances is 0.1 mm to 50 mm.

6. The manufacturing method of a molded body for a sheet-like electrode according to claim 1 or 2,
wherein a region occupied by the plurality of bulk substances dispersed and arranged on the support is 10% to 90% with respect to a region where the electrode material film is formed on the support.

7. The manufacturing method of a molded body for a sheet-like electrode according to claim 1 or 2,
wherein the step A is performed by scattering and supplying the plurality of bulk substances of the electrode material which contains an electrode active material and an electrolytic solution and has a concentration of solid components of 20% by volume to 90% by volume onto the support.

8. The manufacturing method of a molded body for a sheet-like electrode according to claim 1 or 2,
wherein the step A and the step B are performed using a support which is continuously transported, and an electrode material film which is a continuous film is formed in the step B along a transport direction of the support.

9. The manufacturing method of a molded body for a sheet-like electrode according to claim 7,
wherein, in a case where a theoretical amount of the electrode material capable of forming an electrode material film which has the same thickness as a distance between the molding member and the surface of the support and has no gap is denoted by X and a supply amount of the bulk substances of the electrode material onto the support is denoted by Y, a ratio (Y/X) of the supply amount Y to the amount X satisfies 1 ≤ Y/X ≤ 5 on a volume basis.
